# EUROPEAN PATENT SPECIFICATION

(11) **EP 2 110 287 B1**
(45) Date of publication and mention of the grant of the patent: **06.03.2013**
(21) Application number: 08382014.2
(22) Date of filing: 17.04.2008
(51) Int. Cl.: B60R 21/239, B60R 21/276

(54) **Ventilation device**
Ventilationsvorrichtung
Dispositif de ventilation

(43) Date of publication of application: 21.10.2009
(73) Proprietor: Dalphi Metal España, S.A., 28006 Madrid (ES)
(72) Inventor: Arez, Luis Dalphimetal España S.A., 36213 Vigo (Pontevedra) (ES)
(74) Representative: Mehnert, Bernhard

(56) References cited:
- EP-A- 1 415 868
- US-A- 3 820 814
- US-A- 5 492 363
- US-A- 6 056 318
- US-A1- 2006 131 855
- US-A1- 2007 170 710

## Description

This invention refers to a ventilation device for a bag of an airbag module according to the preamble of claim 1.

An airbag module basically consists of a folded bag that inflates by means of a gas produced by a generator when certain sensor devices detect a collision of the vehicle on which such a module is mounted. In this way, the bag unfolds between the vehicle occupant and the vehicle itself to protect the occupant during the collision.

Once the bag has completely unfolded, an airbag should have some kind of device that allows the release of air in as controlled a manner as possible, so that a person who comes into contact with the unfolded bag does not suffer any injuries.

There are in the state of the art known solutions for devices that release air from airbag modules once they are unfolded. For example, the documents of patents EP 1575810, EP 0423981, US 5803121 and WO 2006/073350 describe elastic devices, specifically elastic rings, as ventilation devices. The elastic rings in these known solutions always increase in diameter as the internal pressure inside the bag increases, such that they enable the air to exit from the bag. With this configuration, these known solutions do not provide for a possible adaptation of the system to different configurations and crash severities, since they maintain the pressure at the same level regardless of the severity of the crash.

Besides, US 6, 056, 318 A and US 2007/170710 A1, present ventilation devices of the above kind which, however, require certain additional components to achieve the desired functionality.

This invention aims to overcome this drawback.

For a ventilation device for the bag of an airbag module, of the above kind

this objective is achieved by means of the characterizing features of claim 1. The inventive device can adapt to the various crash configurations to which the airbag module is subjected, depending on the internal pressure inside the bag. The ventilation device comprises a region with a certain elastic coefficient exposed to the internal pressure of the bag. The elastic deformation of the device is what causes the ventilation device to be more or less open and, therefore, releases more or less gas per unit of time.

Whereas the solutions known in the state of the art describe concepts of elastic rings that, given their geometry, always increase in diameter as the internal pressure inside the bag rises, on the contrary the ventilation device as per the invention performs the reverse function, i.e., it makes the ventilation orifice close in a way directly proportional to the rising pressure inside the bag, thus succeeding in making the system compatible with different crash severities.

Preferred embodiments are subject to the subclaims.

Other characteristics and advantages of this invention will be deduced from the following detailed descriptions of some illustrative embodiments of its object in relation to the accompanying figures.

### DESCRIPTION OF THE FIGURES

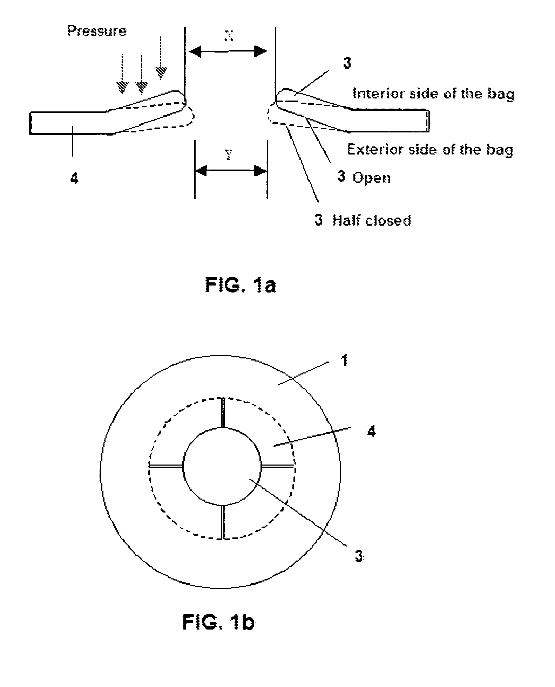

Figures 1 a and 1 b show a detail of the ventilation device of the bag of an airbag module as per this invention.

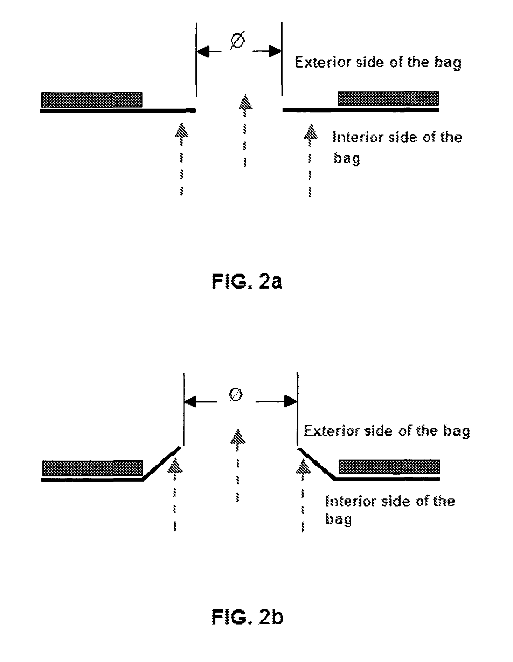

Figures 2a and 2b schematically show how the known ventilation systems function, when the internal pressure inside the bag of an airbag module increases.

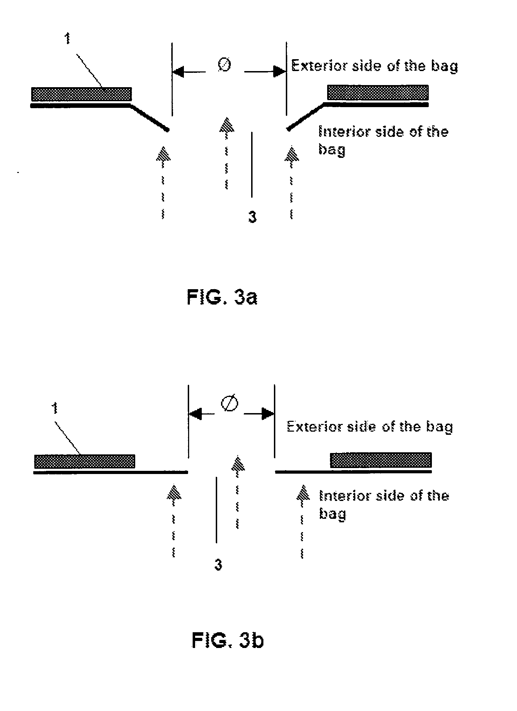

Figures 3a and 3b schematically show how a ventilation system as per this invention functions, when the internal pressure inside the bag of an airbag module increases.
Figure 4 is a graph that shows the evolution of the pressure over time during the operation of a ventilation device for the bag of an airbag module as per this invention.
Figure 5 shows a detail of the location in the bag of a ventilation device for the bag of an airbag module as per a first embodiment of this invention.
Figure 6a shows a detail of the direct fastening to the bag of a ventilation device for the bag of an airbag module either by gluing or vulcanising, as per a first embodiment of this invention.
Figure 6b shows a detail of the direct fastening to the bag of a ventilation device for the bag of an airbag module by means of seams, as per a first embodiment of this invention.
Figure 7 shows a detail of the fastening to the bag of a ventilation device of the bag of an airbag module by means of other technologies, as per a first embodiment of this invention.
Figure 8 shows a detail of the location in the bag's housing region of a ventilation device for the bag of an airbag module, as per a second embodiment of this invention.
Figures 9 and 10 show a detail of the fastening to the bag of a ventilation device for the bag of an airbag module by means of assembly, as per a second embodiment of this invention.
Figure 11 shows a graph of high pressure evolution as a function of time, comparing the bag of an airbag module as per the known solutions and the bag of an airbag module with the ventilation device as per this invention.
Figure 12 shows a graph of low pressure evolution as a function of time, comparing the bag of an airbag module as per the known solutions and the bag of an airbag module with the ventilation device as per this invention.

### DETAILED DESCRIPTION OF THE INVENTION

Thus, this invention proposes a ventilation device 1 for the bag 2 of an airbag module which comprises an adjustable ventilation orifice 3 for the severity conditions of an accident, enabling the partial - complete closing or opening of the ventilation orifice 3 by the action of the gas emitted by the generator 7 of the airbag module. This ventilation orifice 3 is in turn divided into at least two sectors 4 in charge of regulating the release of the ventilation gas through the orifice 3.

The ventilation device 1 is elastic and it adapts to various crash configurations to which the airbag module is subjected, depending on the internal pressure inside the bag 2. The ventilation device 1 comprises a region with a certain elastic coefficient, which is the region defined by the sectors 4, and this region is exposed to the internal pressure of the bag 2. The elastic deformation of the device 1 is what causes the ventilation orifice 3 to be more or less open and, therefore, releases more or less gas per unit of time.

Thus, the ventilation device 1 is made of any material that fulfils the desired mechanical characteristics, preferably silicone rubber.

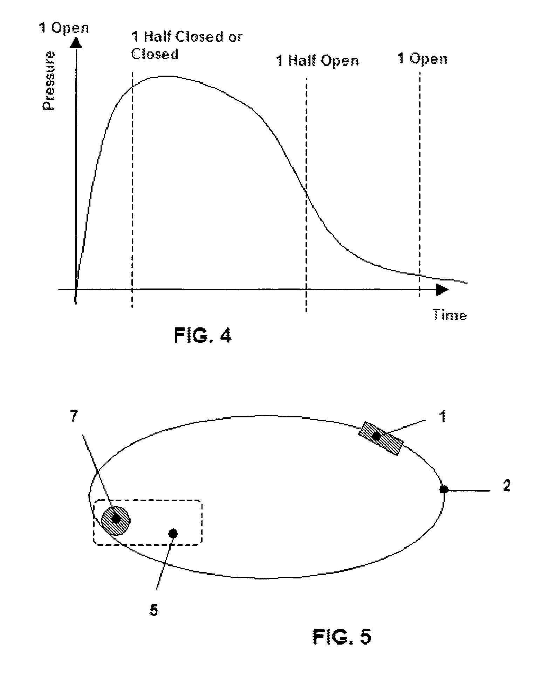

As shown in Figure 4, the ventilation orifice 3 of the ventilation device 1 of the invention is, when unfolding begins, completely open in its idle state.

When the initial pressure inside the bag 2 rises, as a result of the opening of the bag 2 cover and/or the unfolding of the bag 2, the device 1 completely or partially closes. Subsequently, when the initial pressure peak has passed, the pressure of the bag 2 begins to decrease, whereby the device 1 begins to recover and the size of the ventilation orifice 3 adjusts to the actual pressure existing inside the bag 2 at that certain moment, thus leaving the device 1 half open. Finally, throughout the unfolding, the pressure in the bag 2 continues to drop, whereby the device 1 continues to recover its initial shape in idle state, leaving the ventilation orifice 3 is completely open.

The ventilation device 1 as per the invention can be located either in the bag 2 itself or in the housing region or container 5 of the bag 2. In the event that it is implemented in the bag 2, the device 1 could be integrated into the bag 2 by using any known technique for joining materials, such as gluing, vulcanising, with seams, etc. However, in the event that the device 1 is to be implemented in the container 5, this device 1 could be likewise integrated into the bag 2, or else it could be a loose piece or even could be a piece of the container 5.

According to a first embodiment of the invention (Figure 5), the device 1, just as any other conventional ventilation system, can be located in any region of the bag 2, provided that this region is not a bag-door or bag-occupant contact region, so that the device 1 does not become blocked during the period of time in which the release of air is required and so that the energy is absorbed in a correct, controlled manner.

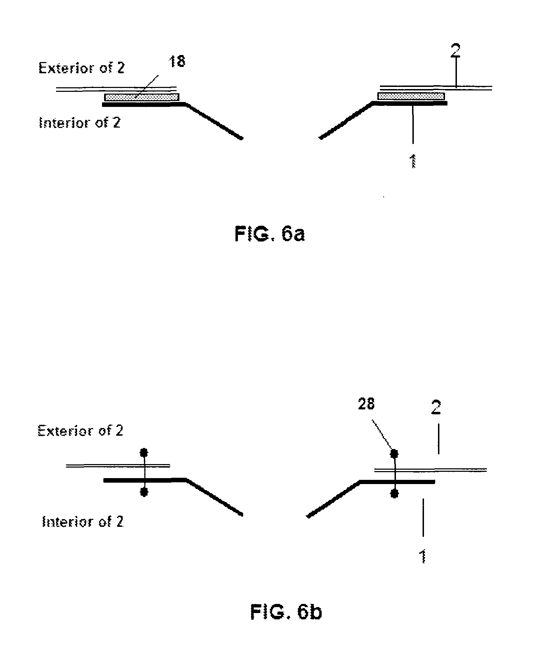

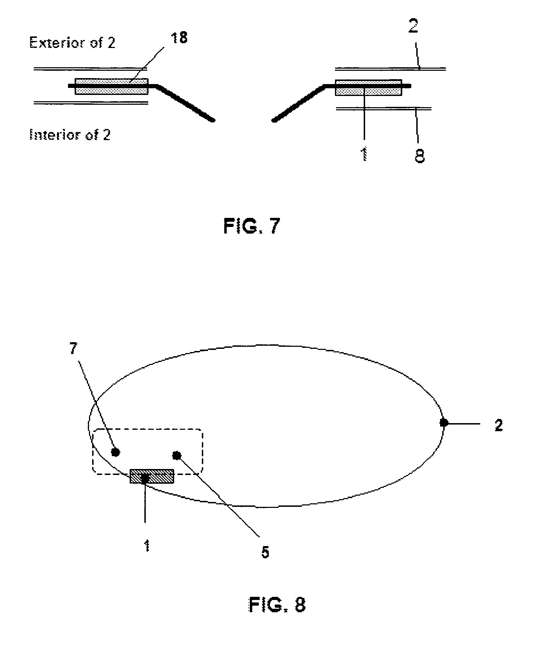

As shown in Figure 6a, the device 1 can be directly fastened to the bag 2 by using known technologies, e.g. gluing or vulcanising 18. The device 1 can also be directly fastened to the bag 2 by means of seams 28, as shown in Figure 6b. As shown in Figure 7, the device 1 can also be fastened to the bag 2 by means of other technologies, e.g. internal reinforcements (patches) fastened to the main panel with seams, calendering, vulcanising, gluing or any other process for joining fabrics 18.

According to a second embodiment of the invention (Figure 8), the device 1 may also be located in the housing region 5 of the bag 2, provided that this region provides the suitable conditions for mounting and also enables the correct emission of the gas without interfering with operation of the device 1.

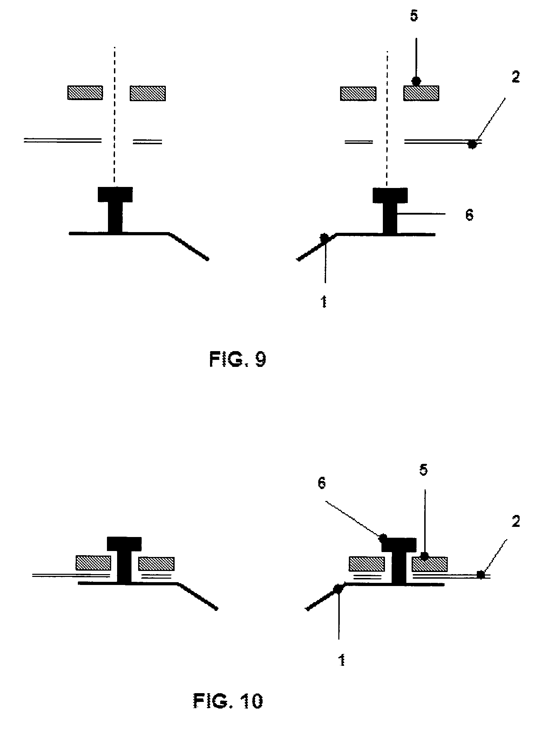

On the other hand, the device 1 may be mounted in the housing region 5 of the bag 2 in the following ways:
- the device 1 is an independent component that is assembled at the same time that the airbag module is assembled. The geometry of the device 1 has some joining elements 6, as shown in Figures 9 and 10, which serve to fasten this component to the bag 2 and to the housing element or container 5. The geometry of these joining elements 6 may also be of various shapes and styles, e.g. in hook shape, in tooth shape, etc.;
- another possibility is that the device 1 be a component integrated into the bag 2, as described above. Fastening the bag 2-device 1 assembly to the housing is not essential in the invention and can be done in multiple ways.

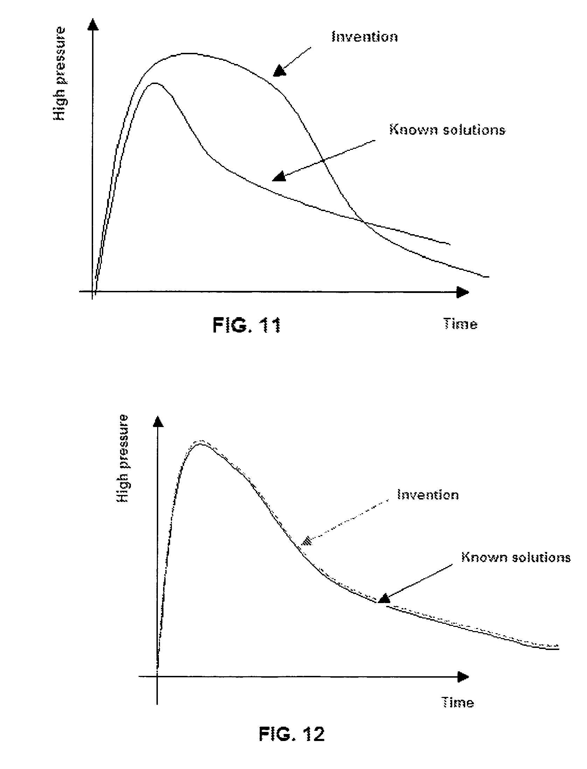

The main advantages of a device 1 as per the invention are detailed and listed below:
- the main advantage of this device 1 is that the retention system provided for the airbag module responds differently for each case of crash severity;
- another major advantage of the device 1 of this invention is that it makes the retention system of the airbag module more efficient by reducing gas losses and preventing the high deflections of ribs resulting from the contact normally observed at the end of the impact (rib deflection is a biomechanical criterion that corresponds to a compression - measured in each of the ribs - that must not be greater than a certain value; if the bag loses too much gas during the impact, this bag becomes depleted and the ribs come into contact with the structure of the vehicle door, and this contact could cause compression and a subsequent deflection);
- since the ventilation orifice 3 closes as the internal pressure rises in the bag 2, less gas exits to the exterior of the bag 2. This, on one hand, makes the pressure relatively higher than the pressure of the known solutions and, on the other hand, retains the pressure inside the bag 2 for a longer period of time; Figure 11 shows the pressure curve in a bag with conventional ventilation, compared to the pressure curve in the same bag into which the pressure device of this invention has been incorporated, all under conditions of a severe crash that causes a high pressure; on the other hand, Figure 12 shows the pressure curve in a bag with conventional ventilation, compared to the pressure curve in the same bag into which the pressure device of this invention has been incorporated, in the case of conventional collision conditions that do not cause high pressure in the bag;
- the device 1 is easily integrated into the bag 2, and there is also the possibility of integrating it into the casing of the airbag module;
- the device 1 can be used for both lateral collisions and for front-on collisions; and
- the device 1 functions passively, as it does not require any electric signal.

In the preferential embodiments that we have just described, those modifications that fall within the scope defined by the following claims can be made.

## Claims

1. Ventilation device (1) for a bag (2) of an airbag module, the device comprising a ventilation orifice (3) through which gas generated during unfolding of this bag (2) after a collision occurs is released, **characterized in that** said ventilation orifice (3) is an open through hole having a diameter (X, Y) for the release of the gas, and is surrounded by a region having a certain elastic coefficient, wherein said region is exposed to the internal pressure of the bag, said region surrounding said ventilation orifice (3), being defined by at least two sectors (4), which function to regulate the release of the ventilation gas through said orifice (3), the said at least two sectors (4) being initially angled toward the interior of the bag when the pressure inside the bag is low so that the elastic deformation of said region of sectors (4) enables the complete or partial closing or opening of the ventilation orifice (3) of the device (1), thus enabling the release of more or less gas per unit of time, such that the ventilation orifice (3) closes in a way directly proportional to the rising internal pressure inside the bag (2) and succeeds in making the device (1) compatible with different crash severities.

2. Ventilation device (1) for a bag (2) of an airbag module, as per claim 1, **characterized In that** the higher the number of sectors (4) above two, the greater will the elasticity of the region comprised by the sectors (4) be.

3. Ventilation device (1) for a bag (2) of an airbag module, as per any of the preceding claims, **characterized in that** the device (1) is made of silicone rubber.

4. Ventilation device (1) for a bag (2) of an airbag module, as per any of the preceding claims, **characterized in that** the device (1) is located in the bag (2) itself.

5. Ventilation device (1) for a bag (2) of an airbag module, as per claim 4, **characterized in that** the device (1) is fastened to the bag (2) by gluing or vulcanising (18).

6. Ventilation device (1) for a bag (2) of an airbag module, as per claim 4, **characterized in that** the device (1) is fastened to the bag (2) by means of seams (28).

7. Ventilation device (1) for a bag (2) of an airbag module, as per claim 4, **characterized in that** the device (1) is fastened to the bag (2) by means of internal reinforcements (8) fastened to the main panel of the bag (2) by means of seams, calendering, vulcanising, gluing or any other process of joining fabrics.

8. Ventilation device (1) for a bag (2) of an airbag module, as per any of the claims 1 - 3, **characterized in that** the device (1) is located in the housing region or container (5) of the bag (2).

9. Ventilation device (1) for a bag (2) of an airbag module, as per claim 8, **characterized in that** the device (1) is mounted in the housing region or container (5) of the bag (2) such that the device (1) is a component integrated into the bag (2).

## Patentansprüche

1. Entlüftungsvorrichtung (1) für einen Sack (2) eines Airbag-Moduls, wobei die Vorrichtung eine Entlüftungsöffnung (3) aufweist, durch die während des Entfaltens dieses Sacks (2) nach Eintritt eines Zusammenstoßes erzeugtes Gas freigesetzt wird, **dadurch gekennzeichnet, dass** die Entlüftungsöffnung (3) eine offene Durchgangsöffnung mit einem Durchmesser (X, Y) zur Freisetzung des Gases ist und von einem Bereich umgeben ist, der einen bestimmten elastischen Beiwert aufweist, wobei dieser Bereich dem Innendruck des Sacks ausgesetzt ist, wobei dieser Bereich die Entlüftungsöffnung (3) umgibt, die durch mindestens zwei Sektoren (4) definiert sind, welche die Freisetzung des Entlüftungsgases durch die Öffnung (3) regulieren sollen, wobei diese mindestens zwei Sektoren (4) zunächst in einem Winkel zu dem Inneren des Sacks angeordnet sind, wenn der Druck in dem Sack so niedrig ist, dass die elastische Verformung dieses Bereiches von Sektoren (4) das vollständige oder teilweise Verschließen oder Öffnen der Entlüftungsöffnung (3) der Vorrichtung (1) ermöglicht, wodurch die Freisetzung von mehr oder weniger Gas pro Zeiteinheit derart ermöglicht wird, dass sich die Entlüftungsöffnung (3) in einer Weise direkt proportional zu dem steigenden Innendruck innerhalb des Sacks (2) schließt und die Vorrichtung (1) damit erfolgreich tauglich für unterschiedliche Aufprallschweregrade macht.

2. Entlüftungsvorrichtung (1) für einen Sack (2) eines Airbag-Moduls gemäß Anspruch 1, **dadurch gekennzeichnet, dass** je größer die Anzahl an Sektoren (4) über zwei, desto größer ist die Elastizität des von den Sektoren (4) umfassten Bereiches.

3. Entlüftungsvorrichtung (1) für einen Sack (2) eines Airbag-Moduls gemäß einem der vorhergehenden Ansprüche, **dadurch gekennzeichnet, dass** die Vorrichtung (1) aus Silikongummi besteht.

4. Entlüftungsvorrichtung (1) für einen Sack (2) eines Airbag-Moduls gemäß einem der vorhergehenden Ansprüche, **dadurch gekennzeichnet, dass** sich die Vorrichtung (1) in dem Sack (2) selbst befindet.

5. Entlüftungsvorrichtung (1) für einen Sack (2) eines Airbag-Moduls gemäß Anspruch 4, **dadurch gekennzeichnet, dass** die Vorrichtung (1) durch Kleben oder Vulkanisieren (18) an dem Sack (2) befestigt ist.

6. Entlüftungsvorrichtung (1) für einen Sack (2) eines Airbag-Moduls gemäß Anspruch 4, **dadurch gekennzeichnet, dass** die Vorrichtung (1) durch Nähte (28) an dem Sack (2) befestigt ist.

7. Entlüftungsvorrichtung (1) für einen Sack (2) eines Airbag-Moduls gemäß Anspruch 4, **dadurch gekennzeichnet, dass** die Vorrichtung (1) an dem Sack (2) über innere Verstärkungen (8) befestigt ist, welche durch Nähte, Kalandrieren, Vulkanisieren, Kleben oder ein anderes Verfahren zum Verbinden von Geweben an der Hauptbahn des Sacks (2) befestigt sind.

8. Entlüftungsvorrichtung (1) für einen Sack (2) eines Airbag-Moduls gemäß einem der Ansprüche 1-3, **dadurch gekennzeichnet, dass** sich die Vorrichtung (1) in dem Gehäusebereich oder Behälter (5) des Sacks (2) befindet.

9. Entlüftungsvorrichtung (1) für einen Sack (2) eines Airbag-Moduls gemäß Anspruch 8, **dadurch gekennzeichnet, dass** die Vorrichtung (1) in dem Gehäusebereich oder Behälter (5) des Sacks (2) derart angebracht ist, dass die Vorrichtung (1) einen in den Sack (2) integrierten Bestandteil darstellt.

## Revendications

1. Dispositif de ventilation (1) pour un sac (2) d'un module d'airbag, le dispositif comprenant un orifice de ventilation (3) à travers lequel est libéré le gaz généré durant le déploiement de ce sac (2) après qu'une collision se soit produite, **caractérisé en ce que** ledit orifice de ventilation (3) est ouverte d'un orifice traversant ayant un diamètre (X, Y) pour la libération du gaz, et est entourée par une région ayant un certain coefficient élastique, dans lequel ladite région est exposée à la pression interne du sac, ladite région entourant ledit orifice de ventilation (3), étant définie par au moins deux secteurs (4), assurant la fonction de réguler la libération du gaz à travers ledit orifice de ventilation (3), lesdits au moins deux secteurs (4) étant initialement incliné vers l'intérieur du sac lorsque la pression à l'intérieur du sac est faible, de sorte que la déformation élastique de ladite région des secteurs (4) permet une fermeture ou l'ouverture totale ou partielle de l'orifice de ventilation (3) du dispositif (1), permettant ainsi la libération des gaz plus ou moins par unité de temps, de telle sorte que l'orifice de ventilation (3) se ferme de façon directement proportionnelle à l'augmentation de la pression interne à l'intérieur du sac (2) et parvient à rendre le dispositif (1) compatible avec différents niveaux de gravité d'accident.

2. Dispositif de ventilation (1) pour un sac (2) d'un module de coussin gonflable, selon la revendication 1, **caractérisé en ce que** plus le nombre de secteurs (4) est au-dessus de deux, plus grande sera l'élasticité de la région constituée par les secteurs (4).

3. Dispositif de ventilation (1) pour un sac (2) d'un module de coussin gonflable, selon l'une quelconque des revendications précédentes, **caractérisé en ce que** le dispositif (1) est fait de caoutchouc de silicone.

4. Dispositif de ventilation (1) pour un sac (2) d'un module de coussin gonflable, selon l'une quelconque des revendications précédentes, **caractérisé en ce que** le dispositif (1) se trouve dans le sac (2) lui-même.

5. Dispositif de ventilation (1) pour un sac (2) d'un module de coussin gonflable, selon la revendication 4, **caractérisé en ce que** le dispositif (1) est fixé sur le sac (2) par collage ou vulcanisation (18).

6. Dispositif de ventilation (1) pour un sac (2) d'un module de coussin gonflable, selon la revendication 4, **caractérisé en ce que** le dispositif (1) est fixé sur le sac (2) au moyen de coutures (28).

7. Dispositif de ventilation (1) pour un sac (2) d'un module de coussin gonflable, selon la revendication 4, **caractérisé en ce que** le dispositif (1) est fixé sur le sac (2) au moyen d'armatures internes (8) fixé au panneau principal du sac (2) au moyen de coutures, de calandrage, de vulcanisation, de collage ou tout autre procédé d'assemblage de tissus.

8. Dispositif de ventilation (1) pour un sac (2) d'un module de coussin gonflable, selon l'une quelconque des revendications 1 à 3, **caractérisé en ce que** le dispositif (1) se trouve dans la zone de boîtier ou récipient (5) du sac (2 ).

9. Dispositif de ventilation (1) pour un sac (2) d'un module d'airbag, selon par la revendication 8, **caractérisé en ce que** le dispositif (1) est monté dans la zone de boîtier ou récipient (5) du sac (2) de telle sorte que le dispositif (1) est un composant intégré dans le sac (2).
